# EUROPEAN PATENT APPLICATION

(11) **EP 4 826 441 A1**
(43) Date of publication of application: **21.10.2026**
(21) Application number: 25300046.7
(22) Date of filing: 16.04.2025
(51) Int. Cl.: G02F 1/01, G02F 1/015, G02F 3/00

(54) **ALL-OPTICAL INTEGRATION**

(71) Applicant: Oxford University Innovation Limited, Oxford, OX2 0JB (GB)
(72) Inventor: BHASKARAN, Harish, Oxford, OX1 3QD (GB); ZHANG, Yi, Oxford, OX1 3QD (GB); FARMAKIDIS, Nikolaos, Oxford, OX1 3QD (GB); LEE, June Sang, Oxford, OX1 3QD (GB); PLEROS, Nikolaos, 541 24 Thessaloniki (GR); ROUMPOS, Ioannis, 541 24 Thessaloniki (GR); MORALIS-PEGIOS, Miltiadis, 541 24 Thessaloniki (GR); TSAKYRIDIS, Apostolos, 541 24 Thessaloniki (GR)
(74) Representative: J A Kemp LLP

(57) **Abstract**

An optical modulation element is configured to use a control optical signal to modulate a controlled optical signal. The optical modulation element comprises an optical transmission structure comprising an optical medium in which the controlled optical signal can propagate and a controller configured to modulate the controlled optical signal by changing the optical property using the control optical signal. The optical transmission structure is configured to at least partially absorb the control optical signal such that the absorption causes a change in an optical property of the optical medium. The optical property changes over a characteristic timescale in response to absorption of the control optical signal. The controller is configured to encode an input signal in the control optical signal. The input signal comprises one or more content portions, each comprising a plurality of signal maxima and having a duration less than the characteristic timescale.

## Description

The invention relates to methods and apparatuses for optical modulation, in particular integrating information encoded using optical signals.

### BACKGROUND

Photonic integrated circuits (PICs) can carry dense information by separating optical signals in space, wavelength, and polarization. The enhanced bandwidth of photonics enables the efficient and compact realization of applications such as photonic cores, neuromorphic network arrays, broadband photodetection, and optical switches. However, it remains challenging to control and modulate signals in photonic circuits because photons having different frequencies do not interact with one another.

Previous approaches have attempted to modulate optical signals using active electronic circuitry. However, this depends on the relatively weak optical response induced by thermo-optic and electro-optic mechanisms. This inevitably increases the overall device footprint and energy consumption. Such devices also require long interaction lengths, which annihilates wavelength or phase selectivity.

One application of particular interest for optical circuits is matrix-vector operations, which are widely used for training artificial intelligence (AI) algorithms. Current electronics have disproportionately large energy time requirements to perform these operations. Linear optical circuits have gained attention for their potential to mitigate these challenges when implemented in artificial neural networks (ANNs) by reducing the latency of multiply-accumulate (MAC) operations and improving the energy efficiency through low-loss optical interconnects. Optical interconnects typically map machine learning operations directly in hardware by spatially multiplexing guided optical modes and weighting them via phase or amplitude modulation.

A particular strength of photonic accelerators is their ability to perform massively parallel operations by multiplexing in space, wavelength and mode. However, the large physical footprints occupied by optical unitary cells and the insertion losses inherent in both active and passive components have made scaling challenging. To date, efforts to overcome these limitations remain far from achieving the scale required for the billions of parameters demanded by complex AI tasks.

Temporal multiplexing can be used to further increase the parameter space and maintain a small system footprint, while interleaving both wavelength and time can be used for tasks including real-time video recognition. However, the desirable temporal accumulation of weighted inputs has only been realised in the electronic domain with photoreceiver charge accumulation while inter-layer analogue nonlinearities are performed either offline with additional circuitry or applied during opto-electronic and subsequent electro-optic conversions.

It would therefore be desirable to provide a method and apparatus for optical modulation that solves some or all of these problems.

### SUMMARY

According to a first aspect of the invention, there is provided a method of optical integration comprising: using a control optical signal to modulate a controlled optical signal, wherein: the controlled optical signal propagates in an optical medium of an optical transmission structure; the control optical signal modulates the controlled optical signal by being at least partially absorbed in the optical transmission structure and thereby changing an optical property of the optical medium; the optical property changes over a characteristic timescale in response to absorption of the control optical signal in the optical transmission structure; and the control optical signal encodes an input signal comprising one or more content portions having a duration less than the characteristic timescale, each content portion comprising a plurality of signal maxima.

This method allows direct control of one optical signal using another. By encoding the content of the input signal over a timescale shorter than the response time of the optical property used for that control, the method allows accumulation of the input signal over time, providing an output representative of changes in the input signal over time.

Optionally, the signal maxima correspond to pulses, optionally wherein the content portions comprise at least 10 pulses, optionally at least 100 pulses, optionally at least 500 pulses, optionally at least 1000 pulses. Pulses are commonly used to encode information so form a convenient way to interface with other systems and components.

Optionally, the input signal comprises a plurality of content portions; consecutive content portions are separated by a recovery period; and the recovery period has a duration greater than the characteristic timescale. This ensures that plural consecutive operations do not interfere with one another.

Optionally, the input signal is encoded in the control signal by changes in a property of the control optical signal, optionally wherein the property of the control optical signal comprises a frequency, amplitude, phase, mode, polarisation, or time delay of the control optical signal. This allows for significant flexibility in how the method is used and interfaces with other components that may provide the input signal.

Optionally, information is encoded in the content portions, optionally at least 4 bits of information, optionally at least 8 bits. This allows the method to be used for computational operations.

Optionally, the controlled optical signal is modulated to encode an integral of the input signal over the characteristic timescale. This allows for fully optical integration of the input signal. This opens the possibility of fully optical MAC operations, which provides a highly scalable implementation with intrinsically high bandwidth.

Optionally, the control optical signal and the controlled optical signal propagate in the optical medium. Having both signals in the same medium can make the device more compact and increase the strength of their interaction.

Optionally, the optical transmission structure comprises a waveguide, a resonator, an interferometer, and/or a photonic crystal. These structures allow for greater control of the propagation and interaction of the optical signals.

Optionally, one or both of a) the control optical signal and/or the controlled optical signal enter the optical transmission structure via evanescent coupling to an input waveguide; and b) the control optical signal and/or the controlled optical signal leave the optical transmission structure via evanescent coupling to an output waveguide. These allow for separation of the optical transmission structure from other components and the formation of standing waves, which can be convenient in some circumstances.

Optionally, the changing of the optical property is achieved by one or more of the following: heat generation, inter-band transition, lasing, carrier depletion. These are convenient mechanisms that are well-understood and can be precisely controlled.

Optionally, the absorbing of the control optical signal changes the optical property via the thermo-optic effect. This is a well-understood effect by which the optical property can be affected.

Optionally, the optical property is refractive index. This has a predictable effect on the transmission of the controlled optical signal.

Optionally, the characteristic timescale is associated with transfer of heat into and/or out of the optical medium. This can be easily controlled and designed based on the environment of the optical medium and its thermal connection to surrounding components. It therefore provides a flexible way to vary the characteristic timescale according to individual applications.

Optionally, the optical transmission structure comprises a plurality of absorbing elements, and an absorption of the controlled optical signal by the plurality of absorbing elements is lower than an absorption of the control optical signal by the plurality of absorbing elements, optionally at least 50% lower, optionally at least 80% lower, optionally at least 95% lower, optionally at least 99% lower. This allows the effect of the control optical signal to dominate and minimise losses of the controlled optical signal during the modulation.

Optionally, either or both of the control optical signal and the controlled optical signal form a standing wave in the optical transmission structure. This creates a spatially well-defined distribution of the optical field which can be leveraged for better control and stronger interactions with the control optical signal and/or the controlled optical signal, thereby allowing more precise control of the modulation.

Optionally, the optical transmission structure comprises a plurality of absorbing elements; and the control optical signal forms a first standing wave configured such that electromagnetic radiation in the first standing wave is absorbed at selected portions of the first standing wave by the plurality of absorbing elements. The absorbing elements allow the absorption of the control optical signal to change the optical property of the optical medium.

Optionally, the first standing wave is formed by: splitting the control optical signal into two portions, optionally equal portions; and coupling the two portions of the control optical signal into the optical transmission structure in opposite propagation directions. This allows the behaviour of the standing wave to be controlled by controlling the splitting of the control optical signal.

Optionally, the method further comprises adjusting a relative phase of the two portions of the control optical signal to increase absorption of the control optical signal by the plurality of absorbing elements. This maximises the efficiency of the device by increasing the effect of the control optical signal.

Optionally, changing the phase of the control optical signal comprises changing a relative phase of the two portions of the control optical signal. This allows the characteristics of the standing wave to be changed.

Optionally, the controlled optical signal forms a second standing wave, and antinodes of the second standing wave are less well aligned with the plurality of absorbing elements than antinodes of the first standing wave. This reduces absorption of the controlled optical signal relative to the control optical signal.

Optionally, the second standing wave is formed by: splitting the controlled optical signal into two portions, optionally equal portions; and coupling the two portions of the controlled optical signal into the optical transmission structure in opposite propagation directions. This allows the behaviour of the standing wave to be controlled by controlling the splitting of the control optical signal.

Optionally, the method further comprises adjusting a relative phase of the two portions of the controlled optical signal to decrease absorption of the controlled optical signal by the plurality of absorbing elements. This maximises the efficiency of the device by reducing the losses experience by the controlled optical signal.

Optionally, the plurality of absorbing elements are regularly spaced along a propagation direction of the optical transmission structure; at least a subset of the antinodes of the first standing wave are substantially aligned with the plurality of absorbing elements; and at least a majority of the antinodes of the second standing wave are aligned with regions nearer to respective midpoints between respective pairs of absorbing elements than with any absorbing element. This maximises absorption of the control optical signal while reducing absorption of the controlled optical signal.

Optionally, the plurality of absorbing elements are regularly spaced along a propagation direction of the optical transmission structure; and either a) a frequency of the control optical signal corresponds to an odd harmonic of the optical transmission structure, and a frequency of the controlled optical signal corresponds to an even harmonic of the optical transmission structure; or b) a frequency of the control optical signal corresponds to an even harmonic of the optical transmission structure, and a frequency of the controlled optical signal corresponds to an odd harmonic of the optical transmission structure. Using opposite odd and even harmonics of the optical transmission structure is a convenient way to ensure the correct relative alignment of the standing wave and absorbing elements within the optical transmission structure.

Optionally, using a control optical signal to modulate the controlled optical signal comprises using a plurality of control optical signals, optionally wherein the plurality of control optical signals differ in frequency. This allows multiple signals to be combined in a single operation.

Optionally, the control optical signal and the controlled optical signal are distinguishable from one another by differing in one or more properties, for example frequency, polarisation, phase, mode, and time modulation. This makes the signals easily distinguishable from one another for readout and control.

Optionally, a frequency of the control optical signal corresponds to a first resonance frequency of the optical transmission structure; a difference between the frequency of the control optical signal and the first resonance frequency is selected to produce a predetermined weighting between a change in a property of the control optical signal and the modulation of the controlled optical signal. The difference between the first resonance frequency and the frequency of the control optical signal will affect how strongly the control optical signal is absorbed in the optical transmission structure. Varying this difference allows a weighting to be created between the amplitude of the control optical signal and the strength of its effect on the optical property of the optical medium.

Optionally, a frequency of the controlled optical signal corresponds to a second resonance frequency of the optical transmission structure; a difference between the frequency of the controlled optical signal and the second resonance frequency is selected to produce a predetermined functional form of a relationship between a change in a property of the control optical signal and the modulation of the controlled optical signal. The change in optical property of the optical medium will typically alter the second resonance frequency. Thereby, the relative frequency of the second resonance frequency and the controlled optical signal will determine how the change in optical property affects transmission of the controlled optical signal.

Optionally, the first resonance frequency is different to the second resonance frequency. This allows the control optical signal and controlled optical signal to be more clearly decoupled at an output of the optical transmission structure.

Optionally, information is encoded in the control optical signal and/or the controlled optical signal, and modulating the controlled optical signal comprises performing a computational operation using the encoded information. This permits the method to be used for all-optical computation operations without the need to convert information back and forth from optical to conventional electronics for processing. This removes the losses and delay associated with those conversions.

Optionally, a frequency of each of the control optical signals corresponds to a resonance frequency of the optical transmission structure; a difference between the frequency of each of the control optical signals and the corresponding resonance frequency is selected to produce a predetermined weighting between a change in a property of the respective control optical signal and the modulation of the controlled optical signal. This allows different control optical signals to have different effects on the controlled optical signal as an output. This permits more complex computational operations.

Optionally, the method further comprises performing a computational operation by combining information encoded in each of the plurality of control optical signals. This can be advantageous for applications such as artificial neural networks and matrix-vector operations.

Optionally, the modulating of the controlled optical signal further comprises changing a property of the control optical signal. This allows the modulation of the controlled optical signal to vary in time as the property of the control optical signal changes.

Optionally the property of the control optical signal comprises an amplitude, phase, or polarisation of the control optical signal. These can all affect the absorption of the control optical signal by the optical transmission structure.

According to a second aspect, there is provided an optical modulation element configured to use a control optical signal to modulate a controlled optical signal, the optical modulation element comprising: an optical transmission structure comprising an optical medium in which the controlled optical signal can propagate, the optical transmission structure configured to at least partially absorb the control optical signal such that the absorption causes a change in an optical property of the optical medium; and a controller configured to modulate the controlled optical signal by changing the optical property using the control optical signal, wherein: the optical property changes over a characteristic timescale in response to absorption of the control optical signal in the optical transmission structure; the controller is configured to encode an input signal in the control optical signal; the input signal comprises one or more content portions having a duration less than the characteristic timescale; and each content portion comprises a plurality of signal maxima.

This element allows direct control of one optical signal using another. By encoding the content of the input signal over a timescale shorter than the response time of the optical property used for that control, the element allows accumulation of the input signal over time, providing an output representative of changes in the input signal over time.

Optionally, the optical transmission structure comprises a plurality of absorbing elements, optionally wherein each of the plurality of absorbing elements comprises one or more of a metal, an intrinsically or extrinsically doped semiconductor, a non-linear material which absorbs light through two photon absorption or other nonlinear process, a dielectric having a non-zero absorption coefficient, or a phase-change material, optionally germanium-antimony-tellurium. Phase-change materials can have large and controllable changes in optical properties, thereby allowing for strong modulation effects.

Optionally, the optical transmission structure comprises a resonator, for example a ring resonator or transmission line resonator. These allow for the formation of standing waves, which can improve performance by controlling regions of high intensity of the optical signals.

### LIST OF FIGURES

Embodiments of the invention will now be described, by way of example only, with reference to the accompanying drawings in which corresponding reference symbols represent corresponding parts, and in which
Fig. 1A is a schematic of an optical modulation element with no applied control signal;
Fig. 1B is a schematic of an optical modulation element with an applied control signal;
Fig. 2A is a schematic of an optical modulation element where signals are applied to both sides of the optical transmission structure to create a standing wave, but with no applied control signal;
Fig. 2B is a schematic of an optical modulation element where signals are applied to both sides of the optical transmission structure to create a standing wave with an applied control signal;
Fig. 3 is a diagram of an on-chip layout of an optical modulation element of the type depicted in Fig. 2A and Fig. 2B;
Fig. 4 shows the transmission spectrum of the device of Fig. 3;
Fig. 5 shows the electric field distribution for the control optical signal around the absorbing elements in the resonant structure of Fig. 3;
Fig. 6 shows the electric field distribution for the controlled optical signal around the absorbing elements in the resonant structure of Fig. 3;
Fig. 7 shows the temperature profile around the absorbing elements in the device of Fig. 2 due to the absorption of the control optical signal;
Fig. 8 demonstrates how the resonant peak at λ2 in Fig. 4 is shifted due to the heating effect from the control optical signal illustrated in Fig. 6;
Fig. 9 shows three different regions of the resonant peak at λ2 in Fig. 4 at which the controlled optical signal can be set to achieve different modulation effects;
Fig. 10 shows how the transmitted amplitude of the controlled optical signal varies due to the application of the control optical signal when the controlled optical signal is located in region A of Fig. 9;
Fig. 11 shows how the transmitted amplitude of the controlled optical signal varies due to the application of the control optical signal when the controlled optical signal is located in region B of Fig. 9;
Fig. 12 shows how the transmitted amplitude of the controlled optical signal varies due to the application of the control optical signal when the controlled optical signal is located in region C of Fig. 9;
Fig. 13 illustrates the response time for various modulation effects on the controlled optical signal as a function of time as the control optical signal is varied;
Fig. 14 is a schematic illustrating how multiple control optical signals can be combined with different weightings to combine plural inputs;
Fig. 15 is a diagram of an on-chip layout of an alternative design of optical modulation element;
Fig. 16 is a diagram of an on-chip layout of an alternative design of optical modulation element;
Fig. 17 shows an example input signal comprising content portions and recovery periods;
Fig. 18 shows scanning electron microscope images of an example optional modulation element;
Fig. 19 shows the experimentally measured transmission spectrum of the device in Fig. 18;
Fig. 20 illustrates results of using the device of Fig. 18 for optical addition measurements;
Fig. 21 shows an experimental validation of the optical integration scheme in which time-resolved pulses are encoded in the control signal;
Fig. 22 shows further results of the experimental validation of the optical integration scheme; and
Fig. 23 shows experimental results combining the optical integration scheme with the use of the shape of the resonances to engineer non-linear activation functions.

### DETAILED DESCRIPTION

As discussed above, current methods of modulating optical signals often require the interaction of the light with electronic devices. Amongst other problems, this limits the bandwidth and response speed of the modulation. The present method and apparatus allow for all-optical modulation and integration, where one optical signal is used to modulate another optical signal without any requirement for interaction with electronics.

In the context of this invention, optical signals can be any electromagnetic signal. Commonly-used wavelengths for photonic computing are in the near infra-red, as used in the example experimental results below. However, the method and apparatus are not particularly limited thereto with appropriate choice of materials and dimensions.

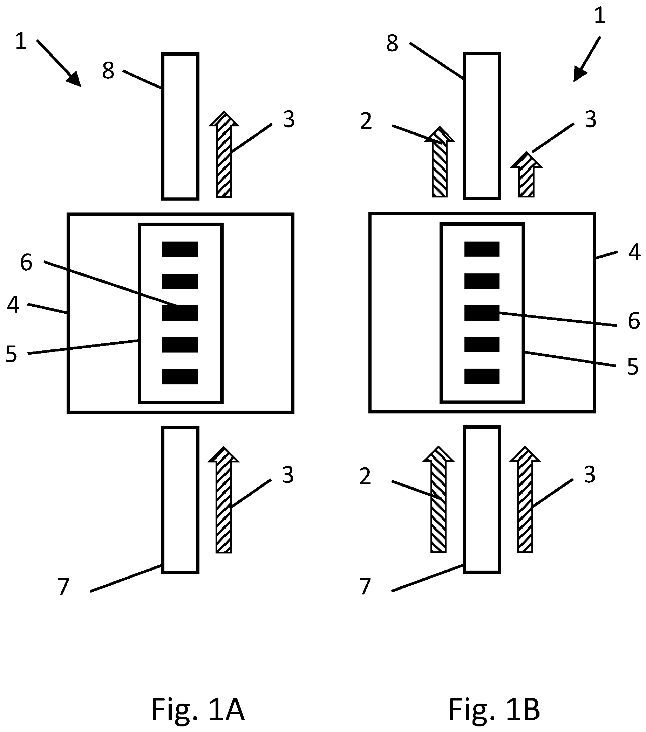

Fig. 1A to Fig. 2B show schematics of an optical modulation element 1 that can be used to implement the method of optical modulation disclosed herein. The optical modulation element 1 is configured to use a control optical signal 2 to modulate a controlled optical signal 3. The control optical signal 2 and/or the controlled optical signal 3 may be infra-red optical signals. The control optical signal 2 and/or the controlled optical signal 3 may have wavelengths of between 750nm and 10µm, optionally between 1µm and 2µm. The control optical signal 2 and the controlled optical signal 3 are distinguishable from one another, for example because they differ in one or more characteristics, such as frequency, polarisation, phase, mode, and time modulation. Mode in this case refers to the various different propagation modes available when the optical transmission structure 4 comprises a waveguide. These comprise transverse electric, transverse magnetic, or transverse electromagnetic modes. Some waveguide modes can have the same frequency and polarisation, but nonetheless still be distinguishable by their different distributions of electric and magnetic fields within the waveguide.

The optical modulation element 1 comprises an optical transmission structure 4. The optical transmission structure 4 comprises an optical medium 5 in which the controlled optical signal 3 can propagate. As well as the controlled optical signal 3, the control optical signal 2 may propagate in the optical medium 5. However, this is not essential, and the control optical signal 2 may be received and propagate in another part of the optical transmission structure 4. The optical medium 5 may be any suitable material such as a metal, semiconductor, or dielectric. For example, the optical medium 5 may comprise silicon, for example being fabricated on a silicon on insulator (SOI) wafer. The optical medium 5 may also comprise free space (e.g. air or a vacuum) in some embodiments.

The optical transmission structure 4 may comprise any suitable structure suitable for the optical signals being used. For example, the optical transmission structure 4 may comprise a waveguide, a plasmonic waveguide, a resonator, an interferometer, and/or a photonic crystal. Thereby, the optical medium 5 may form part of the waveguide, resonator, interferometer, and/or photonic crystal. Where the optical transmission structure 4 comprises a resonator, the resonator may be, for example, a ring resonator or transmission line resonator. The optical transmission structure 4 may be formed by suitable conventional fabrication processes, such as photolithography, electron-beam lithography, reactive ion etching, and additive techniques such as deposition. The optical transmission structure 4 may be part of a larger photonic structure, in particular an on-chip photonic structure.

The control optical signal 2 and the controlled optical signal 3 enter and leave the optical transmission structure 4 before and after the modulation process via any suitable mechanism. For example, either or both of the control optical signal 2 and the controlled optical signal 3 may enter the optical transmission structure 4 via evanescent coupling to an input waveguide 7. The control optical signal and/or the controlled optical signal may also leave the optical transmission structure 4 via evanescent coupling to an output waveguide 8. This allows the optical modulation element 1 to be easily incorporated into a larger optical device comprising other optical processing elements.

The optical transmission structure 4 is configured to at least partially absorb the control optical signal 2. By being at least partially absorbed in the optical transmission structure 4, the control optical signal 2 modulates the controlled optical signal 3, as will be described in more detail below.

This is illustrated schematically with the difference between Fig. 1A and Fig. 1B. In Fig. 1A, the controlled optical signal 3 enters the optical transmission structure 4 through the input waveguide 7, propagates through the optical transmission structure 4, and leaves it via the output waveguide 8. Some absorption of the controlled optical signal 3 is likely to occur due to losses in the optical medium 5. In Fig. 1B, a control optical signal 2 is also applied to the input waveguide 7. As illustrated by the relative sizes of the arrows, the control optical signal 2 is partially absorbed in the optical transmission structure 4. The optical transmission structure 4 is preferably designed such that the control optical signal 2 is absorbed more strongly during its propagation through the optical transmission structure 4 than the controlled optical signal 3.

In this example, the absorption of the control optical signal 2 changes an optical property of the optical medium 5 such that the reduction in the amplitude of the controlled optical signal 3 leaving the optical transmission structure 4 is increased relative to the reduction in the absence of the control optical signal 2. Thereby, the amplitude of the controlled optical signal 3 is modulated by the application of the control optical signal 2. Of course, this is merely exemplary, and in other examples the absorption of the control optical signal 2 may cause an increase in the amplitude of the controlled optical signal 3, or change a property of the controlled optical signal 3 other than its amplitude.

To absorb the control optical signal 2, the optical transmission structure 4 may comprise a plurality of absorbing elements 6. The absorbing elements 6 may be located in or on the optical medium 5. Each of the plurality of absorbing elements 6 may comprise any suitable material that can absorb an optical signal. For example, the absorbing elements 6 may comprise a metal such as titanium, an intrinsically or extrinsically doped semiconductor, a non-linear material which absorbs light through two photon absorption or other nonlinear process or a dielectric having a non-zero absorption coefficient.

The absorbing elements 6 may also comprise a phase-change material, optionally germanium-antimony-tellurium. Phase-change materials can change their optical properties on changing phase. This can allow for a further avenue for dynamic control of the absorption properties of the absorbing elements 6, thereby permitting greater flexibility in how the control optical signal 2 is absorbed and modulates the controlled optical signal 3.

An absorption of the controlled optical signal 3 by the plurality of absorbing elements 6 is preferably lower than an absorption of the control optical signal 2 by the plurality of absorbing elements 6. The controlled optical signal 3 will generally be used as the output of the optical modulation element 1, and so this allows for modulation of the controlled optical signal 3 while reducing the effective loss of signal amplitude due to the modulation process. Optionally, the absorption of the controlled optical signal 3 by the plurality of absorbing elements 6 is at least 50% lower than an absorption of the control optical signal 2 by the plurality of absorbing elements 6, optionally at least 80% lower, optionally at least 95% lower, optionally at least 99% lower.

The absorption of the control optical signal 2 in the optical transmission structure 4 causes a change in an optical property of the optical medium 5. The optical property may, for example, be refractive index. This allows the control optical signal 2 to affect the propagation of the controlled optical signal 3 in the optical transmission structure 4. The changing of the optical property may be achieved by any suitable mechanism, such as one or more of heat generation, inter-band transition, lasing, carrier depletion. The absorbing of the control optical signal 2 may change the optical property via the thermo-optic effect.

The modulating of the controlled optical signal 3 further comprises changing a property or characteristic of the control optical signal 2. To achieve this, the optical modulation element 1 further comprises a controller (not pictured in Fig. 1A and Fig. 1B) that is configured to modulate the controlled optical signal 3 by changing the optical property using the control optical signal 2. The controller may be any suitable system that is able to change the property or characteristic of the control optical signal 2. For example, the controller may comprise an optical control element such as a phase shifter to alter the phase of the control optical signal 2, an attenuator or amplifier to control the amplitude of the control optical signal 2, a polariser to control the polarisation of the control optical signal 2 or any other suitable components. The controller may comprise a computer that is configured to change the characteristic of the control optical signal 2 according to an input, such as human control or other input data.

By changing a property of the control optical signal 2, the absorption of the control optical signal 2 in the optical transmission structure 4 can be varied. This in turn allows the effect on the optical property of the optical medium 5 to be varied. The property of the control optical signal 2 may comprise any suitable parameter, such as an amplitude, phase, or polarisation of the control optical signal. All of these properties can affect the absorption of the control optical signal 2, for example by the plurality of absorbing elements.

To enhance the interactions of the control optical signal 2 and the controlled optical signal 3 with the optical medium 5, and enhance the interactions of the control optical signal 2 with the absorbing elements 6, the optical transmission structure 4 may be configured such that either or both of the control optical signal 2 and the controlled optical signal 3 form a standing wave in the optical transmission structure 4.

A standing wave is formed when coherent light of nearly equal intensity is coupled into a suitable transmission structure travelling in opposite directions. This can be achieved in various ways, for example by transmitting coherent light travelling in opposite directions into the structure, or by using a structure with a reflective boundary from which light travelling in a first direction is reflected back in the opposite direction. The light in the transmission structure can also comprise a combination of a standing wave and a propagating wave.

The field distribution of such a system is described by a periodically varying optical field in space with spatially-fixed nodes (locations of zero electric field) and antinodes (locations of maximum electric field) at any arbitrary point in time (t). The spatial periodicity of these is derived by the superposition of the forward and counterpropagating waves in space (x) and time (t) as: $E \left(x, t\right) = {E}_{0} sin \left(\frac{2 πx}{λ}+ωt+Δφ\right) + {E}_{0} sin \left(\frac{2 πx}{λ}-ωt\right) = 2 {E}_{0} sin \left(\frac{2 πx}{λ}+\frac{Δφ}{2}\right) cos \left(ωt-\frac{Δφ}{2}\right)$ (1) where *E*₀ is the amplitude of the input waves, Δ*φ* is the phase difference between two coherent inputs.

Positions along the waveguide that satisfy even multiples of a quarter wavelength $x = \frac{2 nλ}{4}$*,* where *n* is zero or an integer form nodes (where the amplitude is zero) while odd multiples of a quarter wavelength $x = \frac{\left(2n+1\right) λ}{4}$ form anti-nodes (where the amplitude is maximal).

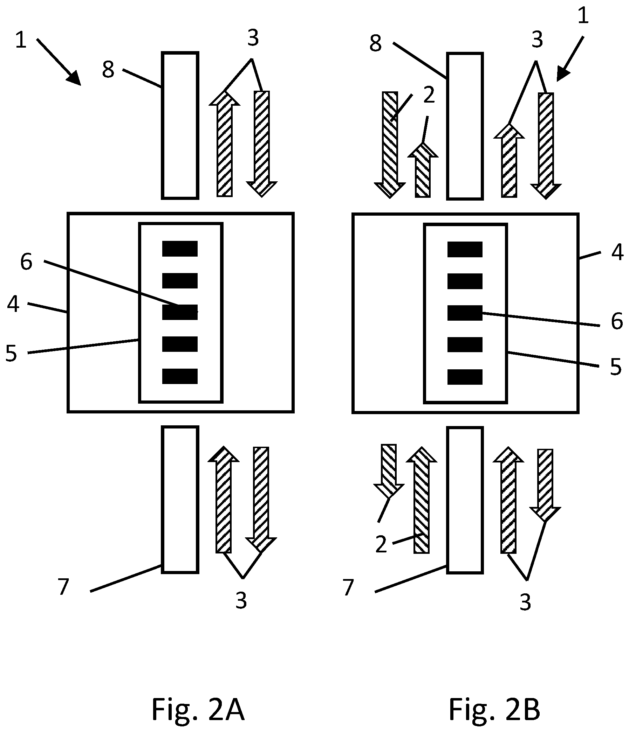

The formation of the standing wave can be achieved by illuminating both sides of the optical transmission structure 4 (i.e. both the input waveguide 7 and the output waveguide 8) with the control optical signal 2 and/or the controlled optical signal 3. This is illustrated in Fig. 2A and Fig. 2B in a structure analogous to that in Fig. 1A and Fig. 1B.

The optical transmission structure 4 and/or the transmission of the control optical signal 2 into the optical transmission structure 4 may be such that it forms a first standing wave in the optical transmission structure 4. Similarly, the controlled optical signal 3 may form a second standing wave in the optical transmission structure 4.

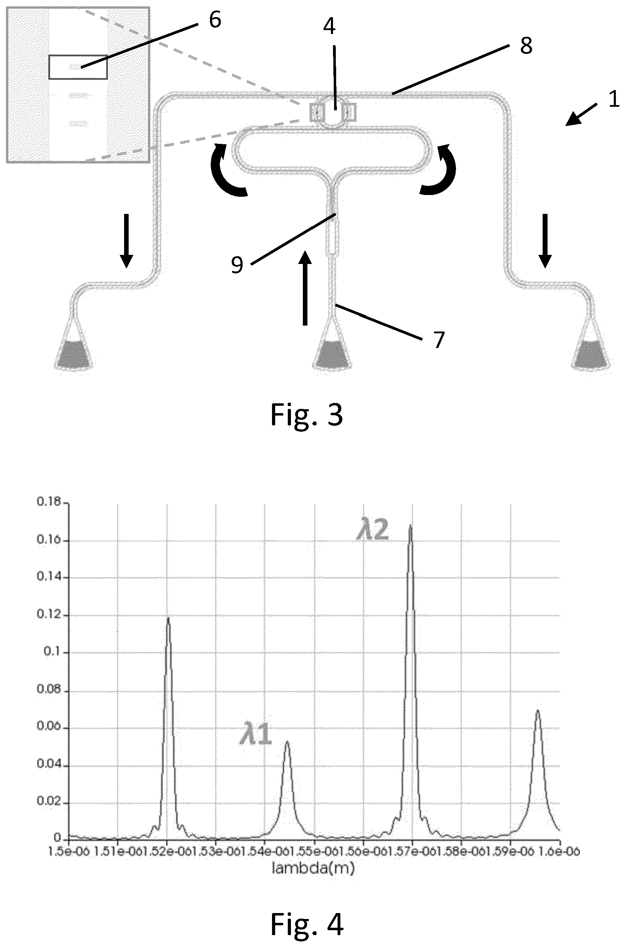

Fig. 3 shows a design for a specific example of the optical modulation element 1 in which both the control optical signal 2 and the controlled optical signal 3 form standing waves in the optical transmission structure 4. The device of Fig. 3 is fabricated as an on-chip device on an SOI wafer. In the example of Fig. 3, the optical transmission structure 4 comprises a micro-ring resonator.

As well as allowing for enhanced interaction of the control optical signal 2 with the absorbing elements 6, forming a standing wave with the controlled optical signal 3 can allow the absorption of the controlled optical signal 3 in the optical medium 5 to be greatly reduced compared to a propagating wave example such as shown in Fig. 1A and Fig. 1B.

The first standing wave may be formed by splitting the control optical signal 2 into two portions, optionally equal portions, and coupling the two portions of the control optical signal 2 into the optical transmission structure 4 in opposite propagation directions. A multimode interferometer (MMI) may be employed to split the control optical signal 2 into the two portions. This is how the first standing wave is formed in the example of Fig. 3. A splitter 9 on the input waveguide 7 (in this case a 1:2 multi-mode interference splitter) divides the signal into two equal portions, which then propagate around the two arms of the input waveguide 7 in opposite directions. A fraction of each of the two portions is then coupled into the optical transmission structure 4.

A frequency of the control optical signal 2 may be chosen to correspond to a first resonance frequency of the optical transmission structure 4. The correspondence of the frequency of the control optical signal 2 and the first resonance frequency does not require that the frequency of the control optical signal 2 is substantially the same as the first resonance frequency. Rather, this means that the frequency of the control optical signal 2 is substantially within the resonance peak around the first resonance frequency. The frequency of the control optical signal 2 may be closer to the first resonance frequency than to any other resonance frequency of the optical transmission structure 4. The frequency of the control optical signal 2 may be within a full-width at half-maximum of the resonance peak around the first resonance frequency. This allows for lower-power modulation because of the stronger interaction of the control optical signal 2 around the first resonance frequency. It is possible to use frequencies outside of the full-width at half-maximum of the resonance peak, but this requires higher input power of the control optical signal 2 to achieve the same change in the optical property of the optical medium 5.

The second standing wave may be formed in a similar manner. Specifically, by splitting the controlled optical signal 3 into two portions, optionally equal portions, and coupling the two portions of the controlled optical signal 3 into the optical transmission structure 4 in opposite propagation directions.

A frequency of the controlled optical signal 3 may be chosen to correspond to a second resonance frequency of the optical transmission structure 4. The correspondence of the frequency of the controlled optical signal 3 and the second resonance frequency does not require that the frequency of the controlled optical signal 3 is substantially the same as the second resonance frequency. Rather, this means that the frequency of the controlled optical signal 3 is substantially within the resonance peak around the second resonance frequency. For example, the frequency of the controlled optical signal 3 may be closer to the second resonance frequency than to any other resonance frequency of the optical transmission structure 4. The frequency of the controlled optical signal 3 may be within a full-width at half-maximum of the resonance peak around the second resonance frequency.

The first resonance frequency may be different to the second resonance frequency. However, this is not essential because, as mentioned above, the control optical signal 2 and the controlled optical signal 3 may be distinguished by another characteristic such as polarisation.

The use of standing waves allows for the strength of the interaction between the optical signals and the optical transmission structure 4 to be engineered by choosing the positions of the nodes and antinodes of the standing waves in the optical transmission structure 4. By modulating the spectral parameters of the optical signals (i.e. wavelength or phase), the spatial positions of the corresponding standing wave nodes and antinodes can be shifted. This can be used to create a difference in the strength of interaction (and thereby the absorption) of the control optical signal 2 and the controlled optical signal 3 with the absorbing elements 6, for example. Where the optical transmission structure 4 comprises a plurality of absorbing elements 6, the first standing wave can be configured such that electromagnetic radiation in the first standing wave is absorbed at selected portions of the first standing wave by the plurality of absorbing elements 6.

As mentioned above, the modulating of the controlled optical signal 3 may comprise changing a property of the control optical signal 2 such as frequency, phase, amplitude, mode, polarisation, and time delay.

**In** this context, changing the phase of the control optical signal 2 may comprise changing a relative phase of the two portions of the control optical signal 2. This may be achieved through a phase shifter on one arm of the input waveguide, for example. By changing the relative phase of the two portions, the positions of the nodes and antinodes of the first standing wave in the optical transmission structure 4 can be shifted.

Controlling the position of the antinodes of the first and second standing waves can be used to increase the intensity contrast between the control and controlled optical signals 2, 3 in the optical transmission structure 4 at a specific position if they have different wavelengths.

In general, it is advantageous for the control optical signal 2 to interact strongly with the absorbing elements 6. It is also advantageous for the absorption of the controlled optical signal 3 by the absorbing elements to be low. To this end, the antinodes of the second standing wave may be less well aligned with the plurality of absorbing elements 6 than antinodes of the first standing wave. At least a subset of the antinodes of the first standing wave may be substantially aligned with the plurality of absorbing elements 6, and at least a majority of the antinodes of the second standing wave are aligned with regions nearer to respective midpoints between respective pairs of absorbing elements than with any absorbing element.

To achieve these alignments, the method may further comprise a step of adjusting a relative phase of the two portions of the control optical signal 2 to increase absorption of the control optical signal 2 by the plurality of absorbing elements 6. The method may further comprise adjusting a relative phase of the two portions of the controlled optical signal 3 to decrease absorption of the controlled optical signal 3 by the plurality of absorbing elements 6.

Preferably, the plurality of absorbing elements 6 are regularly spaced along a propagation direction of the optical transmission structure 4. This facilitates the alignment of the absorbing elements 6 with the nodes and antinodes of the first and second standing waves. The propagation direction need not be a straight line, but follows the propagation of the controlled optical signal 3 and the control optical signal 2 through the optical transmission structure 4. For example, in Fig. 3, the propagation direction is a direction around the circumference of the micro-ring resonator.

A convenient way to increase the contrast between the first and second standing waves at particular points in the optical transmission structure 4 (e.g. at the positions of the absorbing elements) is to choose different frequencies for the control optical signal 2 and the controlled optical signal 3 that correspond to opposite harmonics of the optical transmission structure. For example, the frequencies may be chosen such that a frequency of the control optical signal 2 corresponds to an odd harmonic of the optical transmission structure 4, and a frequency of the controlled optical signal 3 corresponds to an even harmonic of the optical transmission structure 4. Alternatively, a frequency of the control optical signal 2 may correspond to an even harmonic of the optical transmission structure 4, while a frequency of the controlled optical signal 3 corresponds to an odd harmonic of the optical transmission structure 4.

The operation of the device of Fig. 3 will now be discussed in detail to demonstrate how the all-optical modulation can be implemented in practice.

Fig. 4 shows a transmission spectrum of the device of Fig. 3 as a function of wavelength of the optical signals applied to the input waveguide 7. Several resonance peaks are visible corresponding to the harmonics of the micro-ring resonator. These peaks correspond to the frequencies at which standing waves form in the resonator of the optical transmission structure 4. The exact position of these peaks can be chosen by appropriate design of the optical transmission structure 4. For example, the peak positions will be affected by the effective refractive index. The effective refractive index is affected by the choice of the material of the optical medium 5, but also by the overall structure of the optical transmission structure 4. For example, using a layered structure with an optical waveguide capped by a higher-refractive index capping layer will cause a redshift of the resonance peaks of the control optical signal 2 and controlled optical signal 3.

In the experimental results that follow, a frequency of the control optical signal 2 corresponds to the resonance frequency of the optical transmission structure 4 labelled as λ1 in Fig. 4. A frequency of the controlled optical signal 3 corresponds to the resonance frequency of the optical transmission structure 4 labelled as λ2 in Fig. 4.

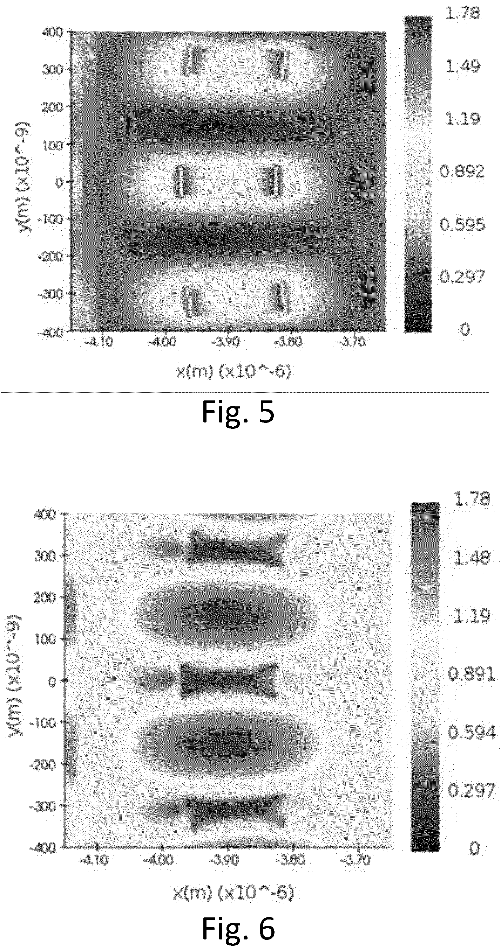

Fig. 5 shows the electric field distribution around the plurality of absorbing elements 6 for the control optical signal 2 in the device of Fig. 3. As can be seen, the intensity is highest at the locations of the absorbing elements 6, and is very low away from the absorbing elements 6. The consequence of this is that the control optical signal 2 is strongly absorbed by the plurality of absorbing elements 6.

Fig. 6 shows the corresponding electric field distribution around the plurality of absorbing elements 6 for the controlled optical signal 3. Contrary to the behaviour for the control optical signal 2, the intensity is lowest at the locations of the absorbing elements 6, and is higher away from the absorbing elements 6. The consequence of this is that the controlled optical signal 3 is only weakly absorbed by the plurality of absorbing elements 6, thereby minimising signal loss of the controlled optical signal 3 in the optical transmission structure 4.

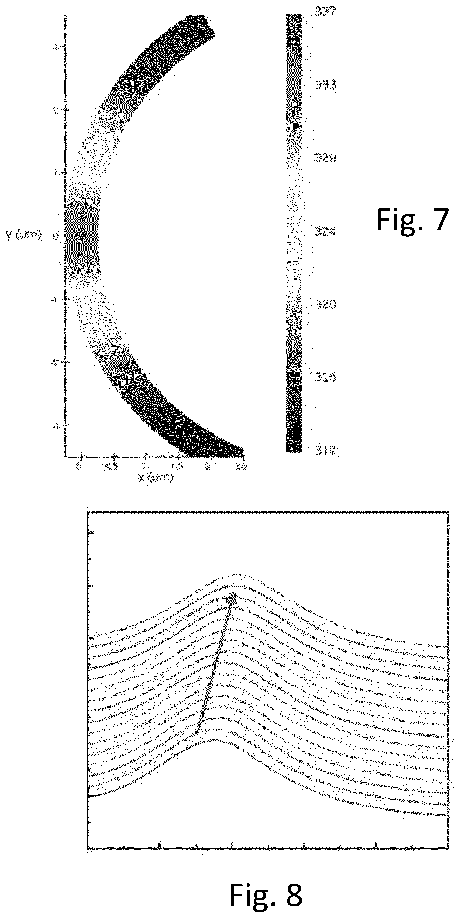

Fig. 7 shows the temperature profile of the ring resonator around the absorbing elements on the left-hand side of the ring while the control optical signal 2 is applied. The absorption of the control optical signal 2 causes localised heating around the absorbing elements. This in turn will cause a change in the refractive index of the optical medium 5 of the optical transmission structure 4 in the region around the absorbing elements 6.

Fig. 8 shows the consequence of the change in refractive index caused by the application of the control optical signal 2. Fig. 8 shows that the wavelength corresponding to the second resonance frequency increases (i.e. the second resonance frequency decreases) as the optical medium 5 is heated by the control optical signal 2.

As mentioned above, the frequency of the controlled optical signal 3 is chosen to correspond to the second resonance frequency. However, the bandwidth of the controlled optical signal 3 is much narrower than the second resonance frequency peak, and remains unchanged as the refractive index of the optical medium 5 is altered. This effectively means that the difference between the frequency of the controlled optical signal 3 and the second resonance frequency changes as a result of the application of the control optical signal 2. This in turn affects the transmission of the controlled optical signal 3 through the optical transmission structure 4. Therefore, the application of the control optical signal 2 allows the transmission of the controlled optical signal 3 to be altered and thereby modulated.

Although this example uses different frequencies of the control optical signal 2 and the controlled optical signal 3 corresponding to different resonance frequencies of the optical transmission structure 4, a similar effect could be achieved even if the frequencies of the control optical signal 2 and the controlled optical signal 3 correspond to the same resonance frequencies of the optical transmission structure 4. For example, if the polarisations of the control optical signal 2 and the controlled optical signal 3 differ and the absorption by the absorbing elements 6 is polarisation-dependent.

Similarly as for the controlled optical signal 3, the bandwidth of the control optical signal 2 is much narrower than the first resonance frequency peak. This means that, for a given amplitude of the control optical signal 2 input to the optical transmission structure 4, the difference between the frequency of the control optical signal 2 and the first resonance frequency will affect the intensity of the control optical signal at the absorbing elements 6. This means that the difference between the frequency of the control optical signal 2 and the first resonance frequency can be selected to produce a predetermined weighting between a change in a property of the control optical signal 2 and the modulation of the controlled optical signal.

In addition, the difference between the frequency of the controlled optical signal 3 and the second resonance frequency will affect how the transmission of the controlled optical signal 3 is changed by the change in the optical property of the optical medium 5 and the corresponding shift in the second resonance frequency.

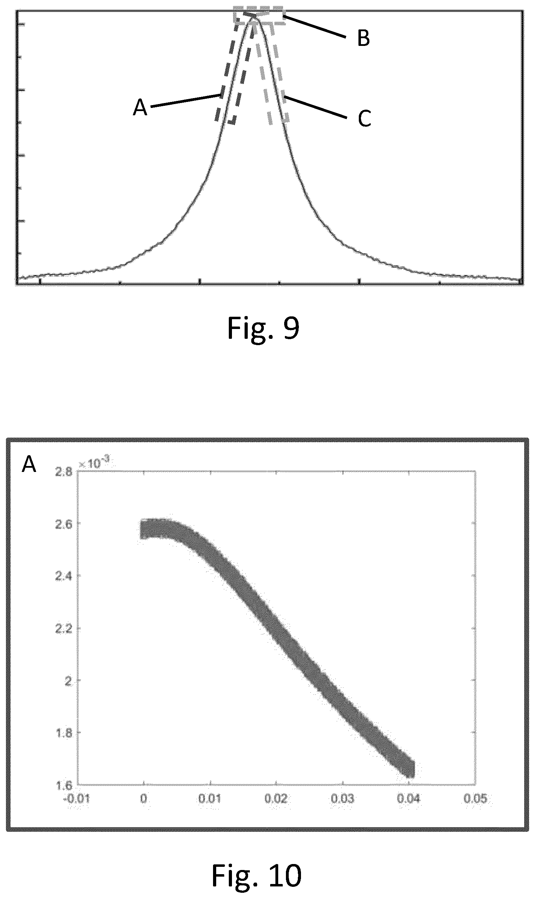

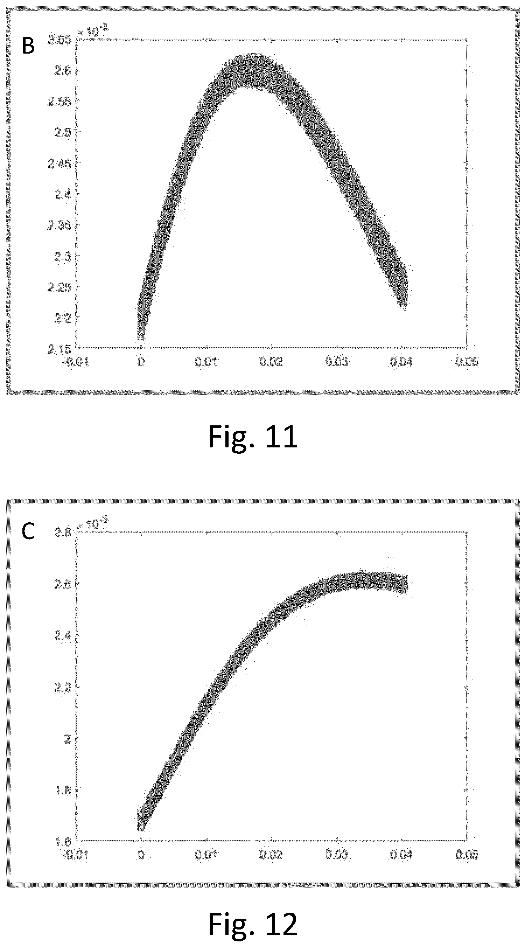

This is illustrated in Fig. 9 to Fig. 12. Fig. 9 shows three different regimes for the controlled optical signal. In regime A, the controlled optical signal 3 has a frequency that is initially on the lower side of the peak in Fig. 9. As the peak shifts to higher values, the transmission of the controlled optical signal 3 falls, as shown in Fig. 10. In regime B, the controlled optical signal 3 has a frequency that is close to the peak in Fig. 9. Fig. 11 shows the case where the frequency of the controlled optical signal 3 is only slightly to the higher side of the peak. As the peak shifts to higher values, the transmission of the controlled optical signal 3 has a peak-like shape, initially increasing and then falling again. In regime C, the controlled optical signal 3 has a frequency that is initially on the higher side of the peak in Fig. 9. As the peak shifts to higher values, the transmission of the controlled optical signal 3 increases, as shown in Fig. 12. Thereby, the difference between the frequency of the controlled optical signal 3 and the second resonance frequency can be selected to produce a predetermined functional form of a relationship between a change in a property of the control optical signal 2 and the modulation of the controlled optical signal.

In particular, when the element is used for machine-learning applications, this effect can be used to implement a non-linear activation function, for example to provide an activation layer of a neural network, without requiring additional electronic or photonic circuit elements. Although the shift in the resonance frequency is typically linear in response to changing input power of the control signal, the shape of the resonance peaks can be used to create a non-linear response of the controlled signal.

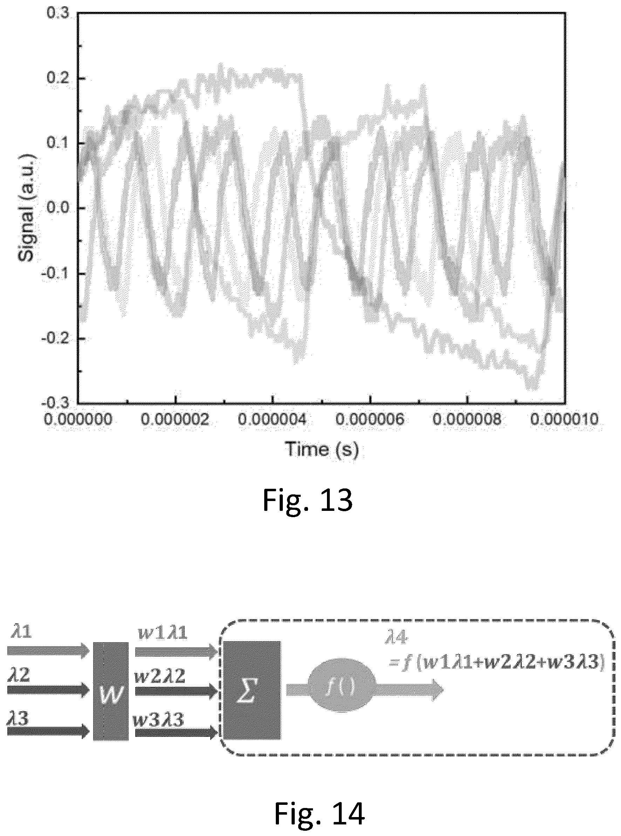

The time constant for these shifts can be relatively short, and so rapid changes in the amplitude and/or frequency of the control optical signal 2 can produce correspondingly rapid shifts in the transmission of the controlled optical signal 3. Fig. 13 illustrates several different example modulations, in which oscillations in transmission of approximately 1MHz are achieved.

The optical modulation element 1 can thereby be used for computational operations. Information can be encoded in the control optical signal 2 and/or the controlled optical signal 3, for example in changes in the amplitude and/or frequency of the optical signals. The optical modulation element 1 allows the information to be combined. Therefore, modulating the controlled optical signal 3 may comprise performing a computational operation using the encoded information.

Using a control optical signal 2 to modulate the controlled optical signal 3 may comprise using a plurality of control optical signals 2. As long as the different control optical signals 2 are distinguishable in some characteristic, for example frequency/wavelength, they can be used to encode multiple channels of information, all of which may be used to modulate the controlled optical signal 3 combined using different weightings

A frequency of each of the control optical signals 2 may correspond to a resonance frequency of the optical transmission structure 4. The control optical signals 2 may correspond to the same resonance frequency, e.g. the first resonance frequency, or may correspond to different resonance frequencies, e.g. different harmonics of the optical transmission structure 4.

A difference between the frequency of each of the control optical signals 2 and the corresponding resonance frequency can then be selected to produce a predetermined weighting between a change in a property of the respective control optical signal 2 and the modulation of the controlled optical signal 3. Thereby, the information encoded in the different control optical signals 2 can be combined with corresponding weightings to perform computational operations. The method may therefore further comprise performing a computational operation by combining information encoded in each of the plurality of control optical signals 2.

This is illustrated schematically in Fig. 14. Plural control optical signals 2 having different wavelengths *λᵢ* are input into the optical modulation element 4, and different weightings *wᵢ* are effectively applied by the difference between *λᵢ* and the corresponding resonance frequency. The control optical signals 2 are then combined together by their effect on the controlled optical signal 3, resulting in a single output at the frequency of the controlled optical signal *λ*₄*.*

The results shown herein were obtained using the device of Fig. 3, with an optical transmission structure comprising a ring resonator fed by a single input waveguide 7 comprising a splitter to divide the incoming optical signals. However, other designs are possible.

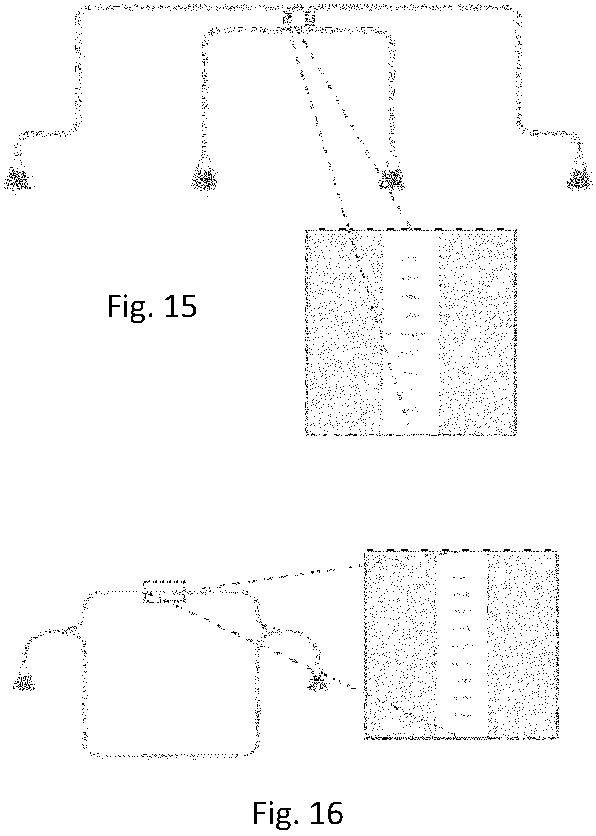

Fig. 15 shows an alternative design with an optical transmission structure comprising a ring resonator, but where the input waveguide has two input contacts. This can allow for further fine-tuning of the standing wave in the optical transmission structure by varying the relative phase and amplitude of the portions of the optical signal applied to each input contact.

Fig. 16 shows a further alternative implementation using a Mach-Zender interferometer. The control optical signal 2 and controlled optical signal 3 are both introduced at both sides of the structure, such that a portion of each signal propagates in both directions through the structure. This allows for the formation of standing waves, similarly as discussed above. The absorbing elements are located only on one arm of the interferometer and thereby absorption of the control optical signal 2 in the upper arm causes a shift in the relative phase of the controlled optical signal 3 between the two arms. This creates a modulation of the controlled optical signal 3.

As mentioned above, a particularly advantageous application of the optical modulation element 1 is to implement a method of optical integration.

The optical property of the optical medium 5 changes over a characteristic timescale in response to absorption of the control optical signal in the optical transmission structure 4. The characteristic timescale will depend on the optical property in question and the physical mechanism by which it is changed.

For example, the characteristic timescale may be associated with transfer of heat into and/or out of the optical medium 5. Where the refractive index is changed via the thermo-optic effect, the characteristic timescale may depend on factors including (but not limited to) a thermal conductivity of the optical medium 5, a specific heat capacity of the optical medium 5, and the thermal properties of any surrounding structure with which the optical medium 5 is in thermal contact.

The characteristic timescale may be engineered by appropriate choice of the material of the optical medium 5, and using the design of the optical transmission structure 4. For example, in the case where the characteristic timescale is associated with transfer of heat into and/or out of the optical medium 5, the characteristic timescale could be engineered by increasing or reducing thermal isolation of the optical medium 5 from the surrounding environment. The characteristic timescale may be at most 10µs, optionally at most 5µs, optionally at most 1µs, optionally at most 500ns, optionally at most 200ns.

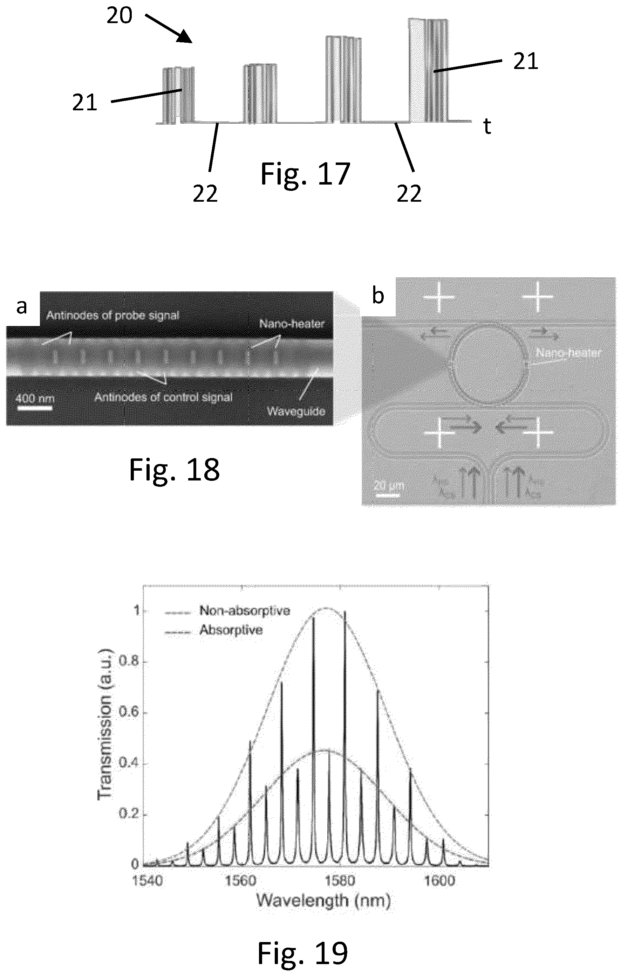

The controller of the optical modulation element 1 is configured to encode an input signal in the control optical signal. An example input signal 20 is illustrated in Fig. 17. The input signal 20 comprises one or more content portions 21 having a duration less than the characteristic timescale. For example, the content portions 21 may have a duration of at most 200ns, optionally at most 100ns, optionally at most 50ns, optionally at most 25ns.

Where the input signal 20 comprises a plurality of content portions 21, consecutive content portions 21 may be separated by a recovery period 22. The recovery period 22 has a duration greater than the characteristic timescale. This ensures that integration operations can be clearly separated in time to prevent interference.

Each content portion 21 comprises a plurality of signal maxima. This allows information to be encoded in the content portions 21. In particular, the signal maxima may correspond to pulses. Each of the content portions 21 may comprise at least 10 pulses, optionally at least 100 pulses, optionally at least 500 pulses, optionally at least 1000 pulses.

For integration with machine learning applications, it may be advantageous for information to be encoded in the content portions as digital or binary information. For example, each content portion 21 may encode at least 4 bits of information, optionally at least 8 bits, corresponding to a single byte. Depending on the speed of the signal generation equipment that is used to encode the input signal 20 in the control signal 2 relative to the characteristic timescale, many more bits could be encoded in each content portion 21. For example, each content portion 21 may encode at least 2 bytes of information, optionally at least 8 bytes, optionally at least 16 bytes, optionally at least 32 bytes, optionally at least 32 bytes.

Using this scheme, the controlled optical signal 3 is modulated to encode an integral of the input signal 20, in particular of the information encoded in the content portions 21 over the characteristic timescale. Because the characteristic timescale limits the rate at which the controlled optical signal 3 can follow changes in the control optical signal 2, changes that occur faster than the characteristic timescale are effectively averaged out. Thereby, the information encoded in the control optical signal 2 can be integrated as it is used to modulate the controlled optical signal 3.

The input signal 20 may be encoded in the control signal 2 by changes in a property of the control optical signal 2. The property of the control optical signal 2 may comprise any of those discussed above, such as frequency, amplitude, phase, mode, polarisation, or time delay of the control optical signal 2.

### EXAMPLES

Experimental results were obtained demonstrating the scheme discussed above. Silicon on insulator wafers (220 nm Si on 3 µm oxide) were used as substrate for photonic integrated circuit (PIC). Fig. 18a is an SEM image of titanium nano-heaters on the ring integrator. The absorptive nano-heaters are designed to spatially match the anti-nodes of the control signal while overlapping with the nodes of the controlled (probe) signal. Nine titanium nano-heaters are deposited on both left & right side of the ring, and the centricity distance between each antenna is 308 nm. The width of each heater is 75 nm, while the length is 150 nm, and the thickness is 20 nm.

Fig. 18b shows the control signals (CS, red arrow) which carry the W/TDM weighted input signals, and controlled (probe) signals (PS, blue arrow) which are sent to be imprinted operation results, are both coupled to the micro-ring resonator (MRR) from opposite directions. The clockwise and counter clockwise travelling waves produce a standing wave pattern within the ring resonator as described above.

Fig. 19 shows the experimentally measured transmission spectrum of the device in Fig. 18 showing periodic lossy and low-loss resonances. The blue dashed line in the graph corresponds to a Gaussian fitting curve and indicates the optical loss at the input grating coupler, while the red dashed line includes the loss both at the grating coupler and the antennas on ring. The selective absorption coefficient can be calculated as around 50%. The combined effects of the standing wave formation and the absorptive nanoantenna thus generate periodic absorptive and transparent spectral bands. We implement this concept on ring-resonators in order to discretise the coupled wavelengths.

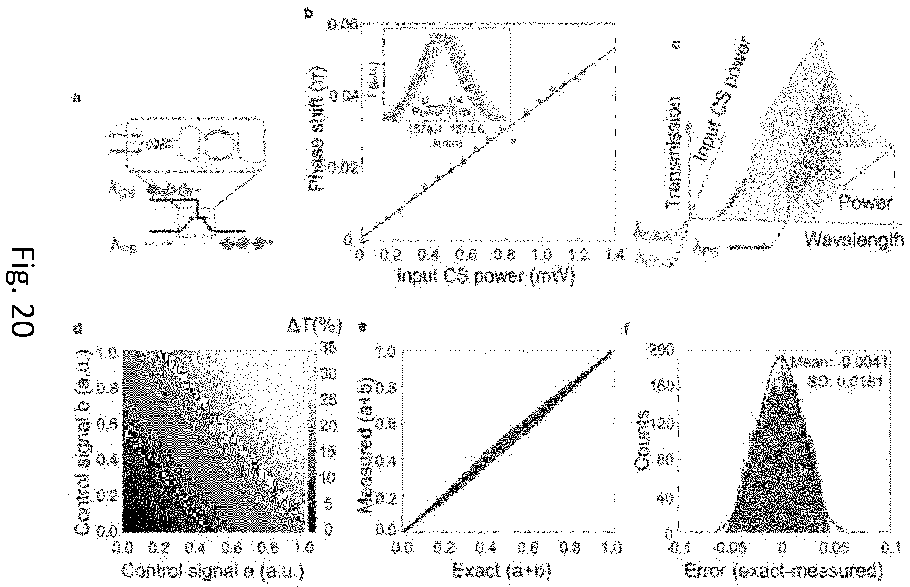

The phase-shift measurement was carried out using the setup described in Fig. 20a. A tuneable laser was used to generate the controlled (probe) signal for the device at telecommunication range (1500 - 1600 nm), and another laser source was used to generate the control signal to shift the spectrum, while the input and output grating couplers were optimized at 1575 nm wavelength. The output spectrum was collected after filtering by an optical tuneable filter.

The linear addition measurement was carried out using the tuneable laser to generate the controlled (probe) signal, and other two laser sources to send addition information. Variable optical attenuators were used to encode data in the optical power of control lines. The output spectrum was collected after filtering by the optical tuneable filter.

The nonlinearity engineering measurement was carried out using the tuneable laser to generate the controlled (probe) signal and another laser source to shift the spectrum, which was controlled by an electrical pulse generator via a variable optical attenuator.

Circulators were used to protect instruments by blocking reflection from the chip.

The high-speed measurements were conducted using the tuneable laser source for the controlled (probe) signal, emitting a power of 14 dBm, while another laser source was used for the control signal with an output power of 6 dBm. The controlled (probe) signal was sent into the PIC through the 10% port of a 90/10% coupler, with the polarization of the incident light adjusted by a polarization controller. The control signal was launched into a Mach-Zehnder modulator (MZM) with a 40 GHz bandwidth, after its polarization was adjusted. The MZM was driven by an arbitrary waveform generator (AWG) with 120 GSa/s and 45 GHz bandwidth to generate the ps pulses. The electrical output signal from the AWG was amplified by an RF amplifier with a 40 GHz bandwidth, providing a 5 Vpp electrical signal. The optical output was then amplified by an erbium-doped fibre amplifier (EDFA), and an optical bandpass filter (OBPF) with a 1 nm bandwidth was used to reject amplified spontaneous emission (ASE) noise. The amplified signal was launched into a second MZM with a 10 GHz bandwidth to generate the 20 ns envelopes. This MZM was driven by an AWG with 1.2 GSa/s and 300 MHz bandwidth, providing a 5.5 Vpp electrical signal. The output optical signal was amplified again with an EDFA to achieve the required input power in the PIC, and the incident power of the control signal was adjusted by a digital variable optical attenuator (VOA). The trace and optical power of the input signal were monitored by an optical power meter and a digital oscilloscope with a 70 GHz bandwidth before being captured by a 70 GHz bandwidth photodiode.

The optical signal was then sent into the PIC to perform the integration on the input pulses. At the output, an OBPF with a 1 nm bandwidth blocked the control signal, allowing only the probe signal to be monitored. Finally, an EDFA amplified the output to compensate for chip losses, and the probe signal was captured by a 70 GHz bandwidth photodiode and recorded on another channel of the digital oscilloscope.

We proceed to evaluate the ability of absorptive modes to shift the resonance of the ring resonator and unselectively modulate all waves travelling within the resonator. Optical power is coupled in the absorptive bands (i.e. wavelengths that correspond to antinode spacing of a chosen set of wavelengths) and is converted into heat. The heat generated leaks to the guiding structure inducing a strong thermo-optic response across wavelengths.

Fig. 20a illustrates the concept of optical end-to-end encoding where an absorptive control signal (*λ_{CS}*) imprints a copy of its amplitude modulated signal to a low intensity probe signal (*λ_{PS}*) used for readout.

Fig. 20b shows the experimental validation of the scheme in Fig. 20a where we quantify the shift of the spectrum of the ring resonator as a function of the input power at the control signal. We find a linear correspondence between the shift of the ring resonator and the power of the control signal with a sensitivity of 0.04 π/mW. The inset shows the spectral response collected at non-absorptive mode while increasing input power at 1583.84 nm.

We proceed to demonstrate that the concept of optical-end-to-end encoding can be extended to an arbitrary number of absorptive wavelengths coupled to the resonator.

Fig. 20c depicts the coupling of two control signals to the same resonator with control signal a (*λ_{CS-a}*) and b (*λ_{CS-b}*) and a single readout signal which is chosen near the half-maximum of one of the non-absorptive resonances. Addition results are shown in Fig. 20d encoded within ΔT = (T - T0)/ T0, which is the change in transmission of the level T with respect to the baseline T0. The change in the optical transmission reflects the total power in the two control signals which corresponds to the multiply-accumulate (MAC) operation of the two control signals. Fig. 20e shows the measured addition results (calculated from normalized transmission variation in the PS) compared with the expected condition. The dashed black line corresponds to a linear fitting function.

Overall, Fig. 20d and Fig. 20e show excellent agreement between the expected and measured MAC in the device. Fig. 20f shows the error of the addition operation calculated from subtracting the measured addition results from the originally programmed addition results from 10,210 addition events. The dashed black line corresponds to a normal distribution fitting curve.

We proceed to demonstrate optical integration via exploiting the characteristic timescale of the system to implement large-scale multiply-accumulate operations in the optical domain. The characteristic timescale of the device, in this case associated with heating up and cooling down, was experimentally measured at approximately 130 ns. Within this time-window, incident optical signals are time-integrated.

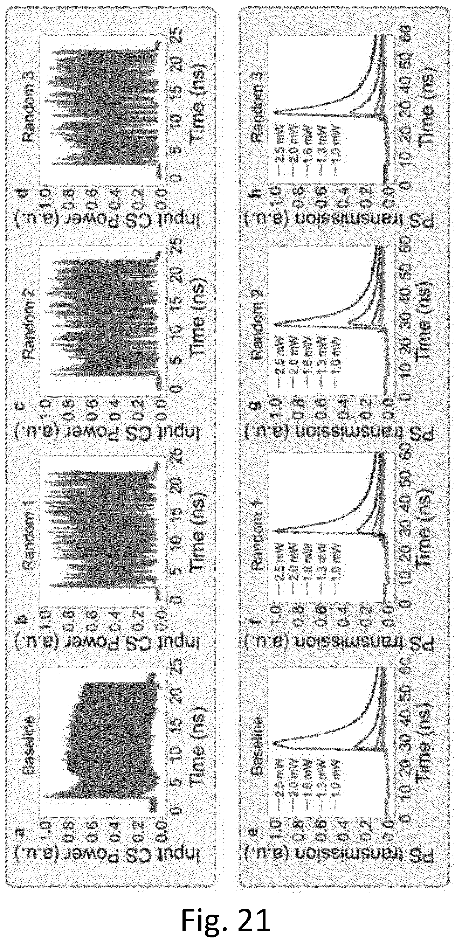

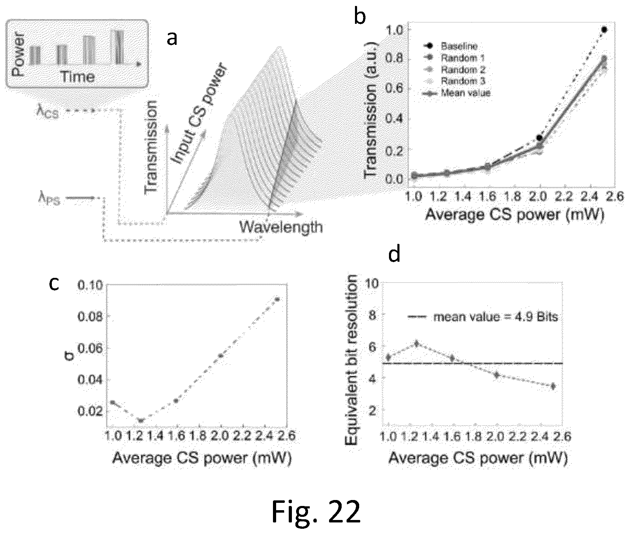

Fig. 21 and Fig. 22 show an experimental validation of the photonic integration scheme where random optical streams at 50 GHz are input to the device at the absorptive wavelengths.

**In** Fig. 21a to Fig 21d, time-resolved pulses (1556.4 nm), 20 ps in duration (50 GHz) are sent within 20ns envelopes encoded in the control signal. These envelopes correspond to the content portions of the input signal that are discussed above. The envelopes are encoded with 1 µs of zeros between them to allow for full thermal recovery of the device between integration intervals. This period corresponds to the recovery period discussed above.

The baseline signal refers to sequences of repeated zeros and ones transmitted through the device, while the random signal refers to sequences with randomly located zeros and ones, maintaining the same total number of zeros and ones and as such the same energy as the baseline signal (500 ones and 500 zeros).

Fig. 21e to Fig. 21h display the relative optical responses at the PS at the same spectral position, which is to the further right of the resonance, collected at a range of CS average input power of 1 to 2.5 mW. The optical power of the multiple CS pulses is integrated over time in heat, and the result is imprinted on the PS, where the peak of each curve denotes the resultant value. After the pulse trains, the integrated value starts to decay over time due to heat dissipation.

Fig. 22b presents the integration peak values of the baseline and random sequences for different CS powers at the same spectral positions, in which a nonlinear response to the average input CS power is applied by the MRR spectrum. The resulting integration peaks exhibit minimal deviation from the mean value, as shown in Fig. 22c. The integration peak values show a ReLU-like nonlinear transfer function due to the intrinsic Lorentzian spectrum of the MRR.

Furthermore, considering the importance of bit resolution in photonic neural network implementations, we calculated the dynamic bit resolution for different CS input powers as $BR = {log}_{2} \frac{1}{σ}$*,* where σ is the standard deviation of the errors from the mean value. Fig. 22d presents the resulting dynamic bit resolution values, with a mean value of approximately 5 bits, which fulfil the precision requirement for performing AI tasks.

Here, we have achieved 1000 multiply operations with fast electro-optic modulators and 1001 operations (1000 linear additions + 1 non-linear operation) within the photonic integrator during a 20ns integration window. This time dynamics can be further leveraged to all-optically encode to 6500 individual signals or weights per wavelength channel, within a single 130 ns time constant at 50GHz. These signals are integrated in time and can be read out directly by the probe signal. This proposed system can perform up to 13,000 MAC operations per control wavelength.

As discussed above in connection with Fig. 9 to Fig. 12, the shape of the resonances can be exploited to all-optically engineer programmable non-linear activation functions without extra circuitry. The difference between the frequency of the controlled optical signal and the second resonance frequency can be selected to produce a predetermined functional form of a relationship between a change in a property of the control optical signal 2 and the modulation of the controlled optical signal.

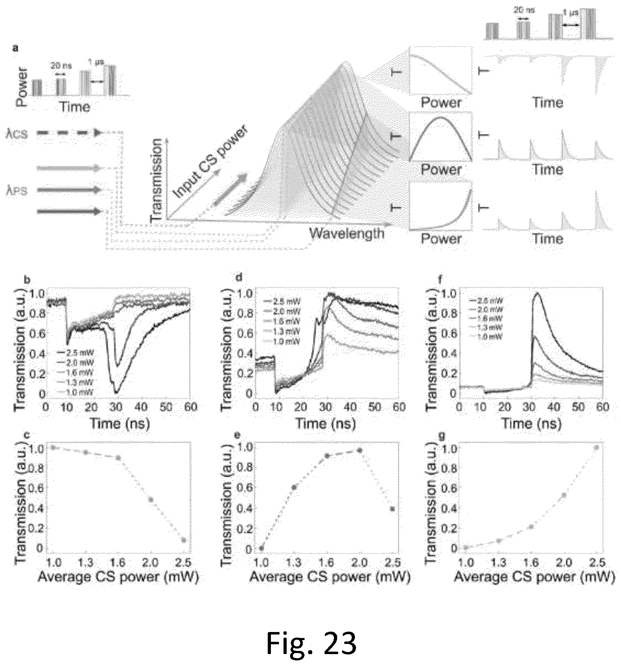

This can be combined with the all-optical integration to engineer different activation functions on the integration results of GHz-signals, as illustrated schematically in Fig. 23a. At different probe wavelengths, different non-linear operations can be performed on the integration results and imprinted to the transmission of PS, while input PS power is kept constant.

The incident control signals consist of alternating sequences of 200 ones and 200 zeros, each lasting 50 ps, within 20 ns envelopes. These envelopes are separated by 1 µs intervals of zeros to allow for thermal recovery between integration cycles.

Fig. 23b, Fig. 23d and Fig. 23f show the normalized optical responses at the PS for the relative spectral positions identified in Fig. 23a, collected at a range of CS average input power of 1 to 2.5 mW. The optical power from multiple CS pulses is integrated, and the integrated result is imprinted on the PS with different nonlinear activation functions applied, where the peak of each curve represents the output value. Following the pulse trains, this value decays over time due to heat dissipation.

Fig. 23c, Fig. 23e, and Fig. 23g illustrate the integration values for different CS powers at the three PS spectral positions, highlighting the extracted nonlinearity, which aligns with previous analyses. The spectral position further to the right of the resonance exhibits a ReLU-like nonlinear response, which could be beneficial for neural network applications. This underscores the device's potential as a nonlinear optical integrator for high-speed signal processing.

## Claims

1. A method of optical integration comprising:
using a control optical signal to modulate a controlled optical signal, wherein:
the controlled optical signal propagates in an optical medium of an optical transmission structure;
the control optical signal modulates the controlled optical signal by being at least partially absorbed in the optical transmission structure and thereby changing an optical property of the optical medium;
the optical property changes over a characteristic timescale in response to absorption of the control optical signal in the optical transmission structure; and
the control optical signal encodes an input signal comprising one or more content portions having a duration less than the characteristic timescale, each content portion comprising a plurality of signal maxima.

2. The method of claim 1, wherein the signal maxima correspond to pulses, optionally wherein the content portions comprise at least 10 pulses, optionally at least 100 pulses, optionally at least 500 pulses, optionally at least 1000 pulses.

3. The method of claim 1 or 2, wherein:
the input signal comprises a plurality of content portions;
consecutive content portions are separated by a recovery period; and
the recovery period has a duration greater than the characteristic timescale.

4. The method of any preceding claim, wherein the input signal is encoded in the control signal by changes in a property of the control optical signal, optionally wherein the property of the control optical signal comprises a frequency, amplitude, phase, mode, polarisation, or time delay of the control optical signal.

5. The method of any preceding claim, wherein information is encoded in the content portions, optionally at least 4 bits of information, optionally at least 8 bits.

6. The method of any preceding claim, wherein the controlled optical signal is modulated to encode an integral of the input signal over the characteristic timescale.

7. The method of any preceding claim, wherein one or more of:
a) the control optical signal and the controlled optical signal propagate in the optical medium;
b) the optical transmission structure comprises a waveguide, a plasmonic waveguide, a resonator, an interferometer, and/or a photonic crystal;
c) the changing of the optical property is achieved by one or more of the following: heat generation, inter-band transition, lasing, carrier depletion;
d) the absorbing of the control optical signal changes the optical property via the thermo-optic effect; and
e) the optical property is refractive index.

8. The method of any preceding claim, wherein the characteristic timescale is associated with transfer of heat into and/or out of the optical medium.

9. The method of any preceding claim, wherein one or both of:
a) the optical transmission structure comprises a plurality of absorbing elements, and an absorption of the controlled optical signal by the plurality of absorbing elements is lower than an absorption of the control optical signal by the plurality of absorbing elements, optionally at least 50% lower, optionally at least 80% lower, optionally at least 95% lower, optionally at least 99% lower; and
b) either or both of the control optical signal and the controlled optical signal form a standing wave in the optical transmission structure.

10. The method of any preceding claim, wherein:
the optical transmission structure comprises a plurality of absorbing elements; and
the control optical signal forms a first standing wave in the optical transmission structure configured such that electromagnetic radiation in the first standing wave is absorbed at selected portions of the first standing wave by the plurality of absorbing elements,
optionally wherein the first standing wave is formed by:
splitting the control optical signal into two portions, optionally equal portions; and
coupling the two portions of the control optical signal into the optical transmission structure in opposite propagation directions,
optionally wherein the method further comprises adjusting a relative phase of the two portions of the control optical signal to increase absorption of the control optical signal by the plurality of absorbing elements.

11. The method of claim 10, wherein the controlled optical signal forms a second standing wave, and antinodes of the second standing wave are less well aligned with the plurality of absorbing elements than antinodes of the first standing wave,
optionally wherein the second standing wave is formed by: splitting the controlled optical signal into two portions, optionally equal portions; and coupling the two portions of the controlled optical signal into the optical transmission structure in opposite propagation directions,
further optionally wherein the method further comprises adjusting a relative phase of the two portions of the controlled optical signal to decrease absorption of the controlled optical signal by the plurality of absorbing elements.

12. The method of any preceding claim, wherein one or both of:
a) using a control optical signal to modulate the controlled optical signal comprises using a plurality of control optical signals, optionally wherein the plurality of control optical signals differ in frequency; and
b) the control optical signal and the controlled optical signal are distinguishable from one another by differing in one or more properties, for example frequency, polarisation, phase, mode, and time modulation.

13. The method of any preceding claim, wherein:
the control optical signal differs in frequency from the controlled optical signal;
the optical property is refractive index; and
the absorbing of the control optical signal changes the optical property via the thermo-optic effect.

14. An optical modulation element configured to use a control optical signal to modulate a controlled optical signal, the optical modulation element comprising:
an optical transmission structure comprising an optical medium in which the controlled optical signal can propagate, the optical transmission structure configured to at least partially absorb the control optical signal such that the absorption causes a change in an optical property of the optical medium; and
a controller configured to modulate the controlled optical signal by changing the optical property using the control optical signal, wherein:
the optical property changes over a characteristic timescale in response to absorption of the control optical signal in the optical transmission structure;
the controller is configured to encode an input signal in the control optical signal;
the input signal comprises one or more content portions having a duration less than the characteristic timescale; and
each content portion comprises a plurality of signal maxima.

15. The optical modulation element of claim 14, wherein the optical transmission structure comprises one or both of:
a) a plurality of absorbing elements, optionally wherein each of the plurality of absorbing elements comprises one or more of a metal, an intrinsically or extrinsically doped semiconductor, a non-linear material which absorbs light through two photon absorption or other nonlinear process, a dielectric having a non-zero absorption coefficient, or a phase-change material, optionally germanium-antimony-tellurium; and
b) a resonator, for example a ring resonator or transmission line resonator.
